# EUROPEAN PATENT APPLICATION

(11) **EP 3 572 792 A1**
(43) Date of publication of application: **27.11.2019**
(21) Application number: 18174217.2
(22) Date of filing: 25.05.2018
(51) Int. Cl.: G01N 21/27, G01N 33/50

(54) **APPARATUS AND METHOD FOR CONTROLLING LIGHT STIMULATION IN IN VITRO TESTING AND SCREENING**

(71) Applicant: AXXAM S.p.A., 20091 Bresso (MI) (IT)
(72) Inventor: AGUS, Viviana, 20091 BRESSO MI (IT); FLAK, Tod, 20091 BRESSO (MI) (IT)
(74) Representative: Colombo, Stefano Paolo

(57) **Abstract**

It is disclosed an apparatus for controlling a light stimulation provided by a light source in an instrument suitable to perform *in vitro* testing and screening operations. The apparatus comprises: a light source driver unit connected to the light source and configured to power the light source to emit one or more flashes of pre-determined width and intensity; and a controller unit connected to the light source driver unit, and configured to: monitor a signal related to the occurrence of at least one event of a normal functioning of the instrument; and operate the light source driver unit to power the light source to emit the at least one flash with a flash timing based on a timing of the at least one event.

## Description

### Technical field

The present invention relates to the field of instrumentation and methods to control photo-activated processes for *in vitro* testing and screening operations. In particular, the present invention relates to an apparatus and a method for controlling light stimulation in a photo-activated process for *in vitro* testing and screening operations.

### Background art

As known, several chemical or biological entities are able to change their properties upon specific electrical or optical stimulation. In particular, photo-controlled molecules (e.g. opsins) have been widely used as optical actuators in biological investigations to trigger the process of interest, upon delivering specific optical stimulation.

Optical stimulation methods are usually combined with different methods to measure the elicited response, depending from its nature, including but not limited to a phenotypical change, an optical tracing of the reaction product, an electrical property change, etc., which can be monitored in the analyzed sample.

Existing photo-controlled molecules can provide responses on very different time-scales: from milliseconds (e.g. transient perturbation of cellular membrane excitability), to minutes (e.g. protein translocation), hours (e.g. protein expression), or days (e.g. organ function). The time of light stimulation which is needed may hence vary from milliseconds to seconds, and also the needed intensity of light stimulation may vary for different photo-controlled molecules. Moreover, to exploit photo-controlled investigations, stimulation of the light sensitive molecules should be synchronized with recording of the elicited response. In particular, the application of the needed light stimulation (number of light pulses, duration and intensity) should be combined with the recording of the response with given speed and sampling period.

Requirements for large-scale (or high-throughput) experimentations, which is typical of early stages of *in vitro* testing and screening, include the possibility to perform analysis in miniaturized formats (e.g. 48, 96, 384 or 1536 multi-well plates) with short experimental time (e.g. simultaneous analysis of multi-well conditions), with limited effort/expense (e.g. cheap consumables, low-specialized experiment design and analysis) and in physiologically relevant assay conditions (e.g. to trace specific response, or to elicit timed perturbations).

Currently available instruments for such *in vitro* testing and screening operations include, but are not limited to: (i) fluorescence plate imagers (e.g. FLIPR Tetra® by Molecular Devices LLC, San Jose, CA, USA; FDSS7000EX by Hamamatsu Photonics K. K., Hamamatsu City, Japan); and (ii) extracellular or transmembrane electric field controllers (E-VIPR® by Vertex Phamaceuticals LLC, San Diego, CA, USA; LUMOS™ by Axion BioSystems, Atlanta, GA, USA; SynchroPatch® 384/768 PE and CardioExcyte 96 by Nanion Technologies GmbH, Munich, Germany).

Currently available instruments for *in vitro* testing and screening operations are also disclosed in a number of patents or patent applications. Among them, US 6,686,193 discloses a drug candidate screening method that is applied to discover compounds with activity against ion channel targets. The method may include modulating the transmembrane potential of host cells in a plurality of sample wells with a repetitive application of electric fields in order to set the transmembrane potential to a level corresponding to a pre-selected voltage dependent state of a target ion channel.

US 2016/0161465 discloses an electro-optical stimulation and recording system, including a substrate and a plurality of wells coupled to the substrate. This system also includes at least one electrode set disposed proximate a respective one of the plurality of wells, wherein the electrode set comprises at least one electrode configured to collect an electric signal associated with at least a portion of the respective well. This system also includes a light-emitting element set corresponding to a respective one of the wells and configured to deliver optical stimulation to at least a portion of the respective well.

### Summary of the invention

The inventors noticed that the currently available instruments designed to perform *in vitro* testing and screening operations present some drawbacks.

Indeed, on the one side, currently available fluorescence plate imagers may be equipped with optics suitable for multiple-wavelength simultaneous multi-well analyses of optical indicators (namely, fluorescent or luminescent molecules able to monitor the elicited response in the analyzed sample), but their light sources lack suitable temporal flexibility to be used for timed stimulation of optical actuators (namely, photo-sensitive molecules able to trigger the desired response).

On the other side, the currently available extracellular or transmembrane electric field controllers may provide simultaneous multi-well analyses of electrical responses combined with temporally flexible light stimulation units, but require expensive components, such as microelectrode-containing multi-well plates or arrays.

In view of the above, the Applicant has faced the problem of providing an apparatus for controlling a light stimulation in a photo-activated process of an instrument suitable to perform *in vitro* testing and screening operations, which allows providing flexible temporal patterns of light stimulation and which allows designing a high-throughput screening (HTS) system in a cost-effective way.

The present invention provides an apparatus for controlling a light stimulation provided by a light source cooperating with an instrument suitable to perform *in vitro* testing and screening operations, which enables the use of photo-controlled molecules requiring flexible light stimulation patterns (e.g. patterns comprising light pulses or flashes with customized timing, duration and intensity) and which enables synchronizing the light stimulation with the simultaneous recording of the elicited response by the instrument. This is particularly advantageous when analyzing photo activated processes which in nature occur in the form of milliseconds transient perturbations occurring at given time intervals (such as electrical signal propagation in excitable cells).

In particular, the apparatus of the present invention is configured to cooperate with an instrument for *in vitro* testing and screening operations provided that:
- the instrument may be coupled with a light source controllable by the apparatus of the invention without inhibiting the normal functioning of the instrument; and,
- a technique may be identified to allow synchronization between the normal functioning of the instrument and the flashing of the light source controllable by the apparatus of the present invention, as it will be described in detail herein after.

On the one side, according to specific embodiments, the present invention provides an apparatus configured to cooperate with an instrument for *in vitro* testing and screening operations already equipped with at least one light source. In particular, according to such embodiments, the apparatus is capable of controlling the duration, the intensity and the timing of flashes of the at least one light source. For instance, the apparatus according to the present invention is configured to cooperate with a fluorescence imager (such as the FLIPR Tetra® imager cited above) comprising two light sources in the form of light-emitting diode (LED) banks, and to control one LED bank of the imager while the imager controls the other LED bank. The imager comprises also a camera, which opens for recording the assay response as the fluorescence of the considered optical indicator changes. According to this exemplary embodiment, the apparatus comprises:
- LED driver modules, electrically connected to the controlled LED bank;
- a photodiode configured to register the light flashing of the LED banks;
- an electrical connection to the camera of the imager, to allow synchronization of the light flashing of the controlled LED bank with the functioning of the imager;
- a microcontroller configured to monitor the output of the photodiode and to manage a number of LED driver parameters (comprising, e.g., timing of the light flashing, duration of the flashes and light intensity);
- a software control module comprising a user interface, which is configured to run on a computer cooperating with the imager.

The apparatus according to the specific embodiments cited above allows providing a flexible pattern of light stimulation. Indeed, according to the exemplary embodiment described herein above, the duration of the light flashing of the controlled LED bank may range from 1 ms to 4000 seconds, with a resolution that may be equal to 0.1 ms. The light intensity may vary from 0% to 100% (where 100% represents the intensity of the light emitted by the controlled LED bank at the maximum power of the LED driver circuit) with a resolution equal to 0.1%.

On the other side, the apparatus of the present invention may be configured to control a light source (e.g. a LED bank) to be coupled with an instrument for *in vitro* testing and screening operations not necessarily already equipped with a light source. In this case, the apparatus of the present invention may be used to control a light source which is added to the instrument to perform a light stimulation of the samples. The instrument may be any instrument designed to perform *in vitro* testing and screening operations, also any instrument provided with a non-optical detection system. In particular, the apparatus of the present invention may be hosted in an instrument capable of providing an optical readout (e.g. fluorescence, luminescence, absorbance, phase microscopy) and/or an electrical readout (e.g. transmembrane potential, extracellular field potential, cellular layer impedance) and/or another type of readout (e.g. radioactivity) upon light stimulation.

In the following description, the assembly comprising the considered instrument for *in vitro* testing and screening operations (herein after also referred to, for simplicity, as "screening instrument") and the apparatus according to the present invention will be referred to as "opto-HTS system".

In this respect, the present invention allows providing a opto-HTS system having a number of advantages. In particular, the cost for the assay components of the system may be advantageously reduced thanks to the fact that there is no need to utilize special assay plates such as electrode-containing plates. Moreover, the system may profitably take advantage of the embedded functionality of handling liquid simultaneously in the plurality of wells for the addition of a test compound. Furthermore, optical stimulation provides a contactless means to trigger biological responses from a homogeneous wide area of cell populations, in a not-invasive intact cell configuration, allowing also to selectively control cells expressing genetically encoded photo-controlled molecules. Finally, the system may monitor physiologically relevant assay conditions thanks to the possibility of inducing reversible and repeatable millisecond timescale perturbations, to the possibility of measuring manifold biological processes using specific optical indicators, and to the possibility of record the optical response on a sub-second timescale basis.

In the following description, the terms "light pulse" and "flash" will be used interchangeably. Moreover, the expression "experiment" will indicate a measurement or testing activity of a given time duration performed by the instrument for *in vitro* testing and screening operations. Examples of such an experiment comprise providing a number of light flashes to a biological sample containing a photo-controlled entity (such as for example, a light activated cation channel able to induce transient membrane depolarization) and an optical indicator (such as for example, a membrane potential sensitive fluorescent probe able to measure the induced changes in transmembrane voltage) resulting in specific monitoring of the induced biological response, simultaneously in a plurality of wells of a multi-well plate.

According to a first aspect, the present invention provides an apparatus for controlling a light stimulation provided by a light source in an instrument suitable to perform *in vitro* testing and screening operations, the apparatus comprising:
- a light source driver unit connected to the light source and configured to power the light source to emit one or more flashes of pre-determined width, W, and intensity, I; and
- a controller unit connected to the light source driver unit, the controller unit being configured to:
   - monitor a signal indicative of the occurrence of at least one event related to a normal functioning of the instrument; and
   - operate the light source driver unit to power the light source to emit the at least one flash with a flash timing based on a timing of the at least one event.

Preferably, the light source comprises a plurality of LEDs.

According to embodiments of the present invention, the light source driver unit comprises a plurality of LED driver modules for operating the plurality of LEDs, wherein a first voltage input signal is configured to control a first assembly of the LED driver modules and a second voltage input signal is configured to control a second assembly of the LED driver modules, each of the first voltage input signal and the second voltage input signal being driven by the controller unit. Preferably, each of the first voltage input signal and the second voltage input signal is driven by the controller unit via a respective operational amplifier configured as a non-inverting amplifier with a voltage gain.

According to other embodiments of the present invention, the light source driver unit comprises a plurality of LED driver modules for controlling operations of the plurality of LEDs, wherein each of the LED driver modules is configured to be controlled by a respective voltage input signal, the respective voltage input signal being driven by the controller unit. Preferably, the respective voltage input signal is driven by the controller unit via a respective operational amplifier configured as a non-inverting amplifier with a voltage gain.

Preferably, the controller unit comprises a microcontroller and at least one digital-to-analog converter configured to drive the input of the respective operational amplifier.

Preferably, the signal comprises at least one signal feature in correspondence of the at least one event.

Preferably, the at least one signal feature corresponds to at least one pulse configured to trigger at least one exposure of a camera of the instrument, the camera being configured to monitor a response of the instrument, and the controller unit is configured to detect the at least one pulse by tapping into a line connecting the camera to a control unit of the instrument.

Preferably, the apparatus further comprises a photodiode configured to monitor the output of the light source.

Preferably, the apparatus further comprises a control module comprising a graphical user interface for providing commands to the controller unit so as to pre-program it with the pre-determined width, W, and intensity, I, of the at least one flash and with information on the flash timing comprising a delay, D, of the at least one flash with respect to the at least one event.

According to a second aspect, the present invention provides a method for controlling a light stimulation provided by a light source in an instrument suitable to perform *in vitro* testing and screening operations, the method comprising, at a controller unit connected to the light source:
a) monitoring a signal indicative of the occurrence of at least one event related to a normal functioning of the instrument; and
b) operating the light source to emit at least one or more flashes of pre-determined width, W, and intensity, I, and with a flash timing based on a timing of the at least one event.

Preferably, the method further comprises pre-programming the controller unit to operate the light source to emit a given sequence of flashes, the pre-programming comprising providing the controller unit with the pre-determined width, W, and intensity, I, of the at least one flash and with information on the flash timing comprising a delay, D, of the at least one flash with respect to the at least one event.

Preferably, the signal comprises at least one signal feature in correspondence of the at least one event, the at least one signal feature corresponding to at least one camera pulse configured to trigger at least one exposure of a camera of the instrument, and the method further comprises counting the at least one camera pulse to associate each camera pulse with a respective camera pulse number.

Preferably, the method further comprises:
- checking whether a current camera pulse number, i, equals a pre-programmed number, TN, indicating the number of the camera pulse after which to make the light source flash for the first time within the given sequence of flashes; and
- in case the current camera pulse number, i, equals the pre-programmed number, TN, waiting for the pre-programmed delay, D, and operating the light source to flash.

Preferably, the method further comprises:
- providing a counter, j, of the at least one flash;
- checking whether the counter, j, has reached a pre-programmed number, RC, indicating a total number of flashes within the given sequence of flashes;
- in case the counter, j, has not reached the pre-programmed number, RC, checking, after a subsequent camera pulse, whether the current camera pulse number, i, equals TN+j*dTN, wherein dTN indicates a pre-programmed number of camera pulses between two consecutive flashes of the given sequence of flashes; and
- in case the current camera pulse number, i, equals TN+j*dTN, waiting for the pre-programmed delay, D, and operating the light source to flash.

According to a third aspect, the present invention provides a computer program product comprising computer-executable instructions for performing, when the program is run on a computer, the steps of the method as set forth above.

### Brief description of the drawings

The present invention will become clearer by reading the following detailed description, given by way of example and not of limitation, to be read by referring to the accompanying drawings, wherein:
- Figure 1 shows a block scheme of a opto-HTS system comprising a screening instrument and an apparatus for controlling a light stimulation of the instrument according to an exemplary embodiment of the present invention;
- Figure 2 shows a block scheme of the apparatus of Figure 1;
- Figure 3 shows a block scheme of a control unit of the apparatus of Figure 1;
- Figure 4 is a flowchart illustrating the method for controlling a light stimulation of the instrument according to embodiments of the present invention;
- Figure 5 schematically shows a window of a graphical user interface of the apparatus of Figure 1;
- Figure 6 is a diagram schematically illustrating an exemplary sequence of flashes of light stimulation as controlled by the apparatus of Figure 1; and
- Figure 7 shows results of an experiment carried out by the inventors with an opto-HTS system according to the present invention.

### Detailed description of preferred embodiments of the invention

According to embodiments of the present invention, it is provided an apparatus for controlling a light stimulation in a system for *in vitro* testing and screening operations comprising a screening instrument. For sake of clarity, as a non-limiting example, the following description will be widely focused on a specific embodiment of the present invention according to which the apparatus of the present invention is configured to cooperate with a fluorescence imager and in particular with a FLIPR-Tetra® imager currently provided by Molecular Devices LLC. As already anticipated above, this is not limiting since the apparatus according to the present invention may cooperate with other types of instruments as well. Indeed, the apparatus according to the present invention may be configured to cooperate with any instrument capable of performing *in vitro* testing and screening operations by measurements of a physical or biological or chemical response provided by a photo-controlled entity (e.g. photo controlled molecules) which has been elicited by a light stimulation. It is to be understood that in the present description an instrument capable of performing *in vitro* testing and screening operation is preferably an instrument capable of operating with any format of microtiter plates, including 48, 96, 384, 1536 or more individual wells.

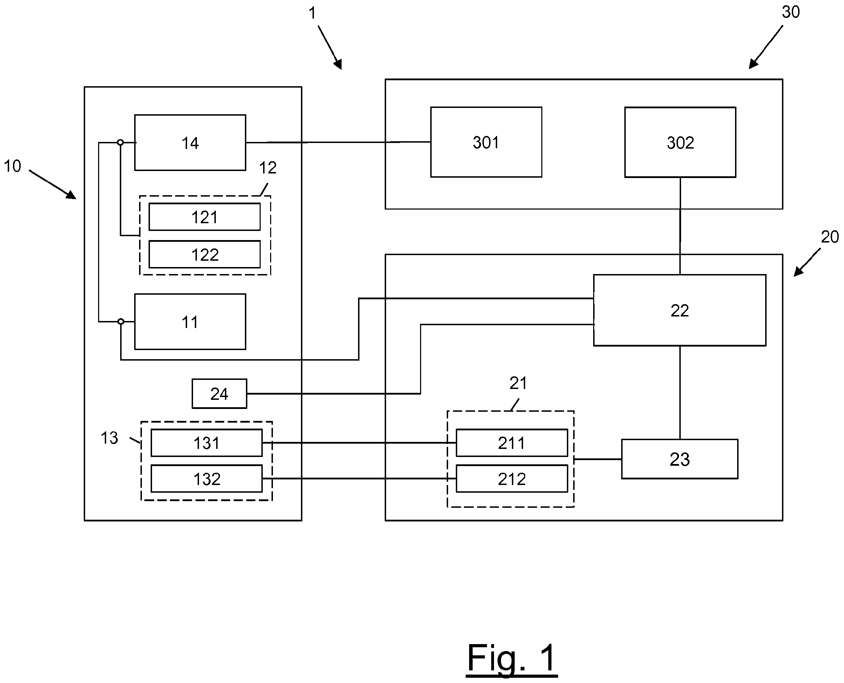

Figure 1 schematically shows a block scheme of an opto-HTS system 1 comprising a screening instrument 10 and an apparatus 20 for controlling the light stimulation in such an instrument according to an exemplary embodiment of the present invention. The opto-HTS system 1 further includes a computing unit 30, such as a personal computer, a tablet, or the like. For instance, the computing unit 30 may be a Windows-based personal computer. The computing unit 30 preferably comprises an instrument control module 301 for controlling operation of the screening instrument 10 and an apparatus control module 302 for controlling operation of the apparatus 20, as it will be described in greater detail herein after. Both the instrument control module 301 and the apparatus control module 302 are preferably software control modules. Each of them preferably includes a respective graphical user interface (GUI).

The screening instrument 10 of Figure 1 comprises:
- a first light source 12;
- a second light source 13; and
- a control unit 14.

The screening instrument 10 considered in the present description comprises also a microtiter plate having a transparent bottom (not shown in the drawings) and a camera 11.

The microtiter plate of instrument 10 is a flat plate comprising a plurality of wells for the *in vitro* testing and screening operations. The number of wells may be 48, 96, 384, 1536 or more. The camera 11 is positioned below the microtiter plate and configured to monitor changes over time of either fluorescent or luminescent readouts coming from the microtiter plate. The camera 11 may be a high-sensitivity camera comprising a charge-coupled device (CCD).

As anticipated above, the screening instrument 10 of the exemplary embodiment considered in this description is the FLIPR Tetra® imager. According to this exemplary embodiment, the first light source 12 and the second light source 13 both comprise a respective set of LEDs. The first set of LEDs and the second set of LEDs both comprise a first LED assembly 121, 131 and a second LED assembly 122, 132, each of the first and second LED assemblies comprising a number of individual LED devices assembled together into a single component. The number of individual LED devices in a LED assembly may be equal to 14. The two LED assemblies of each set are positioned below and on either side of the microtiter plate to be illuminated. The LED devices of each set of LEDs 12, 13 are configured to emit a sequence of one or more light pulses of the respective wavelength, the pulses having pre-programmed timings (namely, the pulses are set to occur at pre-programmed instants in time), widths and intensity.

For instance, the first set of LEDs may comprise LED devices emitting green light, namely emitting light with peak power in the wavelength range between 510 nm and 545 nm, while the second set of LEDs may comprise LED devices emitting blue light, namely emitting light with peak power in the wavelength range between 470 nm and 495 nm.

According to this exemplary embodiment of the present invention, the control unit 14 of the screening instrument 10 is connected to the camera 11. Further, the control unit 14 is connected to the first set of LEDs 12 and comprises a set of LED driver modules to operate the first set of LEDs 12. The control unit 14 is configured to control the operation of both the camera 11 and the first set of LEDs 12 according to commands provided thereto by the instrument control module 301 of the computing unit 30 according to user's instructions provided through the GUI of the instrument control module 301. The operation of the components of the FLIPR-Tetra® imager considered in the exemplary embodiment are known and hence they will not be described further in the present description.

According to this exemplary embodiment of the present invention, the second set of LEDs 13 are connected to the apparatus 20, as it will be described herein after.

It should be appreciated by the person skilled in the art that, in the FLIPR-Tetra® imager considered in the exemplary embodiment of the present invention described so far, if the second set of LEDs 13 are not connected to respective LED driver modules of the control unit 14, those LED driver modules must be connected to a "blank" set of LEDs having no function. The "blank" set of LEDs are usually available from the manufacturer of the imager.

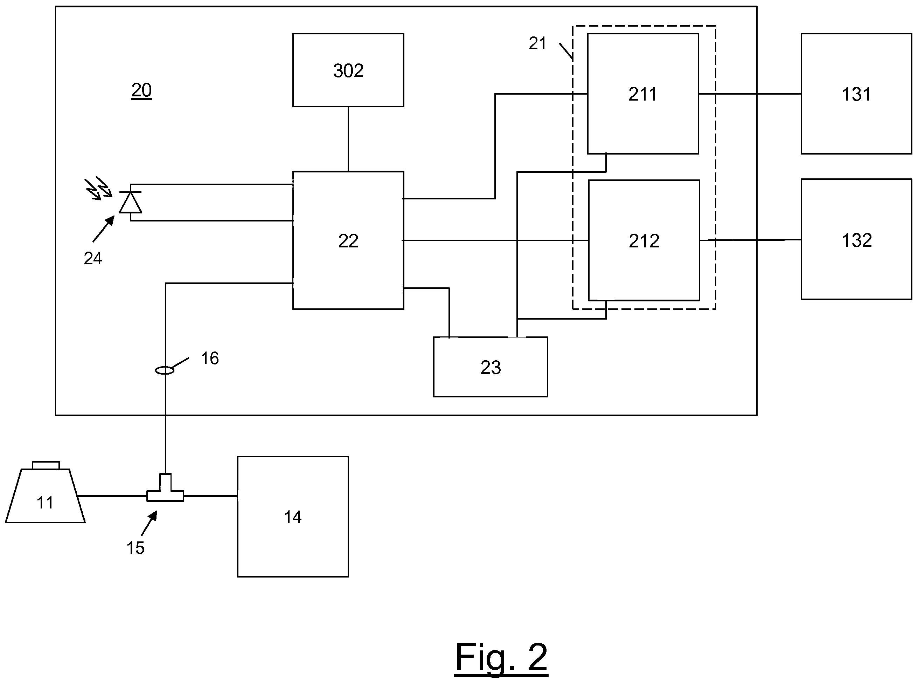

Figure 2 shows a block scheme of an apparatus 20 according to embodiments of the present invention. Figure 2 also shows blocks representing the components of the screening instruments 10 to which the apparatus 20 is connected.

As shown in Figure 2, the apparatus 20 preferably comprises;
- a light source driver unit 21;
- a controller unit 22;
- a power supply unit 23; and
- a photodiode 24.

The light source driver unit 21 preferably comprises a set of driver modules for controlling the operation of the second light source 13. In particular, according to the exemplary embodiment described so far, the light source driver unit 21 may comprise a first assembly of LED driver modules 211 and a second assembly of LED driver modules 212 for powering the second set of LEDs 13 of the screening instrument 10 to emit a sequence of light pulses to illuminate the microtiter plate. According to the exemplary embodiment, the light pulses emitted by the second set of LEDs 13 are blue light pulses. In operative conditions, preferably, the first assembly of LED driver modules 211 is connected to the first LED assembly 131 of the second set of LEDs 13 of the screening instrument 10, and similarly the second assembly of LED driver modules 212 is connected to the second LED assembly 132 of the second set of LEDs 13 of the screening instrument 10. Connection between the light source driver unit 21 and the second set of LEDs 13 is preferably implemented via a ribbon cable, for instance a 60-conductor ribbon cable. Moreover, preferably, each of the first assembly of LED driver modules 211 and the second assembly of LED driver modules 212 comprises a number of LED driver modules corresponding to the number of LED devices of the respective LED assembly. In particular, the first assembly of LED driver modules 211 preferably comprises one LED driver module for each LED device in the first LED assembly 131, and the second assembly of LED driver modules 212 preferably comprises one LED driver module for each LED device in the second LED assembly 132. Therefore, according to the exemplary embodiment described above, each of the first assembly of LED driver modules 211 and the second assembly of LED driver modules 212 may comprise 14 LED driver modules.

Each LED driver module has an output current that can be controlled by a voltage input signal. According to the specific variant of the exemplary embodiment of the present invention illustrated in Figure 2, a single voltage input signal may be used to control the output current of a group of LED driver modules within the light source driver unit 21. For instance, a first voltage input signal may be used to control the output current of the first assembly of LED driver modules 211 and a second voltage input signal may be used to control the output current of the LED driver modules of the second assembly of LED driver modules 212. Each of the first voltage input signal and the second voltage input signal for the LED driver modules is provided by a respective operational amplifier comprised in the light source driver unit 21. Each of these operational amplifiers (not shown in Figure 2) may be a non-inverting amplifier with a voltage gain equal to, e.g., 2. The input of each operational amplifier is preferably driven by the controller unit 22, in particular by an output of a respective digital-to-analog converter (DAC) of the controller unit 22, as it will be described hereinafter.

According to alternative variants, each single LED driver module may be controlled by a respective voltage input signal. In other words, according to these alternative variants, each LED driver module may be controlled by a respective output of a DAC. This advantageously allows to individually control each LED driver module, which may allow changing the illumination pattern striking the microtiter plate. Moreover, through individual control of the LED driver modules, testing may be performed in order to determine whether each LED driver module is correctly functioning and/or whether each LED is outputting the same amount of light. Finally, it allows individually tuning the voltage input signals of the LED driver modules to increase the uniformity of the illumination pattern.

The LED driver modules may comprise, for instance, commercially available modules such as the LuxDrive A009 series BuckBlock™ LED power modules by LEDdynamics, Inc., Randolph, VE, USA.

The operational amplifiers of the light source driver assembly 21 may be TLV274 operational amplifiers provided by Texas Instruments Inc., Dallas, TX, USA.

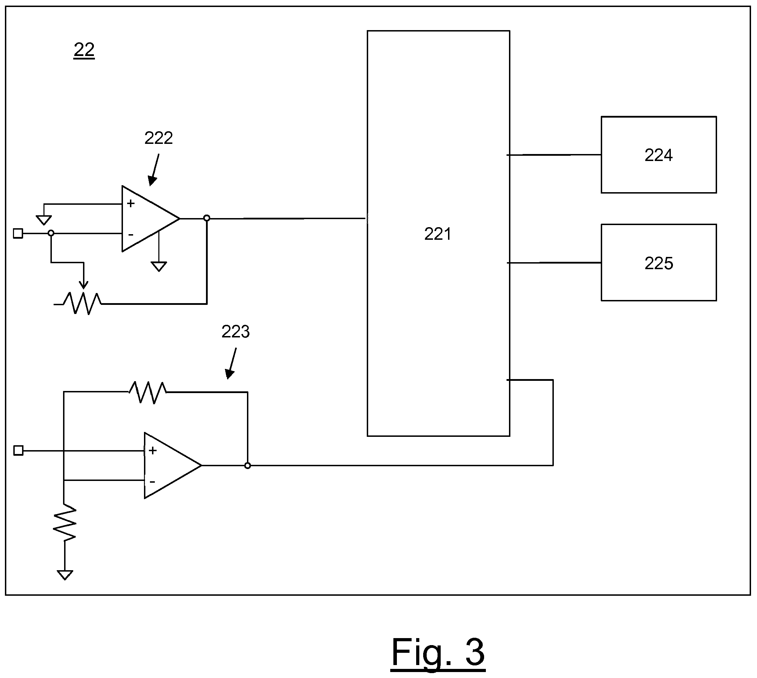

Figure 3 shows a block scheme of the controller unit 22 according to an embodiment of the present invention. The controller unit 22 schematically illustrated in Figure 3 preferably comprises a microcontroller 221, a first operational amplifier 222, a second operational amplifier 223, a first digital-to-analog converter (DAC) 224 and a second digital-to-analog converter (DAC) 225.

The microcontroller 221 is preferably connected to the photodiode 24 (not shown in Figure 3) through the first operational amplifier 222. It is further connected to the line connecting the camera 11 of the screening instrument 10 (not shown in Figure 3) to the control unit 14, through the second operational amplifier 223. Moreover, the microcontroller 221 is preferably connected to the light source driver unit 21 (not shown in Figure 3) through the first DAC 224 and the second DAC 225. In particular, the microcontroller 221 is preferably connected to the first assembly of LED driver modules 211 through the first DAC 224, and similarly it is connected to the second assembly of LED driver modules 212 through the second DAC 225. The physical connection between each of the first DAC 224 and the second DAC 225 and the first assembly of LED driver modules 211 and second assembly of LED driver modules 212, respectively, may be implemented via a ribbon cable, in particular a 16-conductor ribbon cable.

As anticipated above, each of the first DAC 224 and the second DAC 225 preferably drives the input of a respective operational amplifier to provide the voltage input signal of a respective assembly of LED driver modules. Each of the first DAC 224 and the second DAC 225 may be operated with a +5V DC power supply provided by the microcontroller, so that in this case the maximum output of the DAC is equal to 5 Volts. By considering the embodiment described above, wherein each of the first DAC 224 and the second DAC 225 drives a respective operational amplifier having a voltage gain equal to 2, it follows that through the first DAC 224 and the second DAC 225 the microcontroller 221 may modulate the first and second input voltage signals for the LED driver modules from 0 Volts to 10 Volts.

The microcontroller 221 is preferably further provided with a USB serial interface (not shown in Figure 3) to communicate with the computing unit 30.

The microcontroller 221 may be an Arduino UNO microcontroller. The first DAC 224 and the second DAC 225 may be, for instance, the MCP4725 12-bit digital-to-analog converters provided by Microchip Technology Inc., Chandler, Arizona, USA, and they may be connected to the microcontroller 221 via the Inter-Integrated Circuit (I²C) protocol.

According to alternative embodiments, the control of the light source driver unit 21 may be performed by a standard computer equipped with a device providing analog and digital input and output functions, and with a software module capable of driving the hardware to perform the same operations reported in this description for the controller unit 22.

Referring back to Figure 2, the power supply unit 23 is preferably a DC power supply unit configured to provide power to the light source driver unit 21 and to the controller unit 22.

The photodiode 24 is preferably placed into the screening instrument 10. In particular, the photodiode 24 is preferably placed facing the bottom of the microtiter plate of the screening instrument 10 and is configured to monitor the output of the first light source 12 and the second light source 13. The photodiode 24 may be connected to the first operational amplifier 222 in a transimpedance amplifier circuit with an adjustable gain, as schematically represented in Figure 3.

The photodiode 24 may be, for instance, the SLD-70BG2A photodiode provided by Luna Inc., Roanoke, VA, USA. The first operational amplifier 222 may be a TLV274 operational amplifier provided by Texas Instruments Inc., Dallas, TX, USA. According to advantageous embodiments, the photodiode may be a wavelength-sensitive photodiode and it may be configured to distinguish between the output of the first light source 12 and the second light source 13.

According to the embodiment of the present invention described so far, a connection 16 (referred to in the following description as a "camera trigger line") between the microcontroller 221 (in particular, the input of the second operational amplifier 223 of the controller unit 22) and the line that connects the camera 11 to the control unit 14 of the screening instrument 10 is established. Indeed, the inventors noticed that, in operative conditions of the screening instrument 10, the line that connects the camera 11 to the control unit 14 carries a camera trigger signal between the control unit 14 and the camera 11, the camera trigger signal comprising signal features indicative of the camera operations. In particular, the camera trigger signal comprises a sequence of pulses triggering the camera exposures; more in particular, it comprises an individual pulse before each occurrence of a camera exposure to image the microtiter plate. Hence, the inventors deduced that this signal may be used to synchronize the normal functioning of the screening instrument 10, in particular the flashing of the first light source 12, with the flashing of the second light source 13 controlled by the apparatus of the present invention. This synchronization mechanism will be described in greater detail herein after.

The camera trigger line 16 may be a coaxial cable using an SMB (SubMiniature version B) connector. The camera trigger line 16 may be configured to tap into the line connecting the camera 11 to the control unit 14 of the screening instrument 10 by inserting a tee-connector 15, e.g. a SMB tee-connector, as schematically shown in Figure 2. The second operational amplifier 223 may be configured as a non-inverting amplifier with a voltage gain equal to 2, as schematically represented in Figure 3. The second operational amplifier 223 may be a TLV274 operational amplifier provided by Texas Instruments Inc., Dallas, TX, USA.

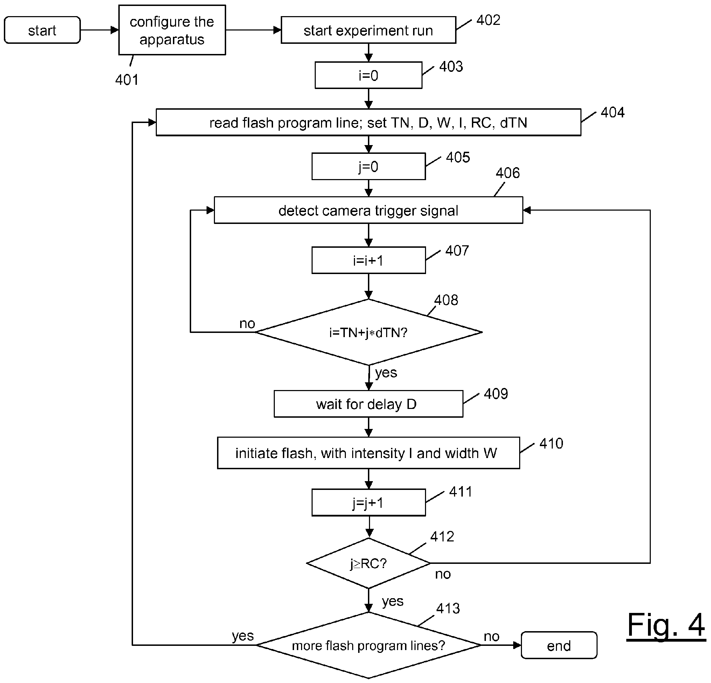

In the following description, the operation of the system 10 will be described, with particular reference to the operation of the apparatus 20 according to the present invention. More in particular, a method implemented by the apparatus 20 for controlling the light stimulation provided by the second light source 13 in the screening instrument 10 during an experiment run will be presented with reference to the flowchart of Figure 4. It is assumed that during the experiment run a sequence of one or more light pulses must be emitted by the second light source 13. According to an exemplary configuration, it may be assumed that these light pulses have all the same width and intensity.

The method preferably comprises a configuration step 401 during which the apparatus 20 is preferably programmed to control the light stimulation provided by the second light source 13 in the screening instrument 10 during the considered experiment. Such configuration step preferably precedes the usage of the apparatus 20 during the experiment run of the screening instrument 10.

During the configuration step, the apparatus control module 302 preferably determines a number of commands for the controller unit 22, and in particular for the microcontroller 221. These commands are then sent from the computing unit 30 to the controller unit 22. The communication between the computing unit 30 and the controller unit 22 may take place via the USB serial interface of the microcontroller 221. Once the microcontroller 221 elaborates the received commands, it is preferably pre-programmed with the following information:
- a timing of the light pulses of a sequence of light pulses to be emitted by the second light source 13 during the experiment run. Timing information comprises, for each light pulse, a delay of each light pulse that is to be emitted by the second light source 13 with respect to a respective feature of a synchronization signal;

- a width of the light pulse; and
- an intensity of the light pulse.

The microcontroller 221, at the end of the configuration step, is preferably configured to modulate the voltage input signals for the LED driver modules according to the above pre-programmed information.

According to the present invention, the synchronization signal is a signal provided by the screening instrument 10 which comprises signal features indicative of the occurrence of one or more events related to the normal functioning of the instrument 10. Within the meaning of the present invention, the considered events relate to operations of an instrument's component which may occur sequentially for a given number of times. According to the exemplary embodiment described so far, these events may be the exposures (or openings) of the camera 11. In this case, the synchronization signal may be the camera trigger signal, which comprises a sequence of signal features in the form of pulses (indicated in the following description as "camera pulses"), each pulse triggering a respective camera exposure to image the microtiter plate. Alternatively, these events may be the flashes of the first light source 12 which may be detected by the photodiode 24.

By exploiting the synchronization signal, the light pulses emitted by the second light source 13 are preferably synchronized with respect to the normal functioning of the screening instrument 10. In particular, each light pulse of the second light source 13 is preferably delayed with respect to a respective signal feature of the synchronization signal (e.g. a respective camera pulse associated with a camera exposure) by the pre-programmed value provided by the apparatus control module 302 to the microcontroller 221 during the configuration step, as it will be described in greater detail herein after.

The pre-programmed information to be sent from the apparatus control module 302 to the microcontroller 221 may be provided by a user (namely, the experimenter) accessing the apparatus control module 302 through its GUI.

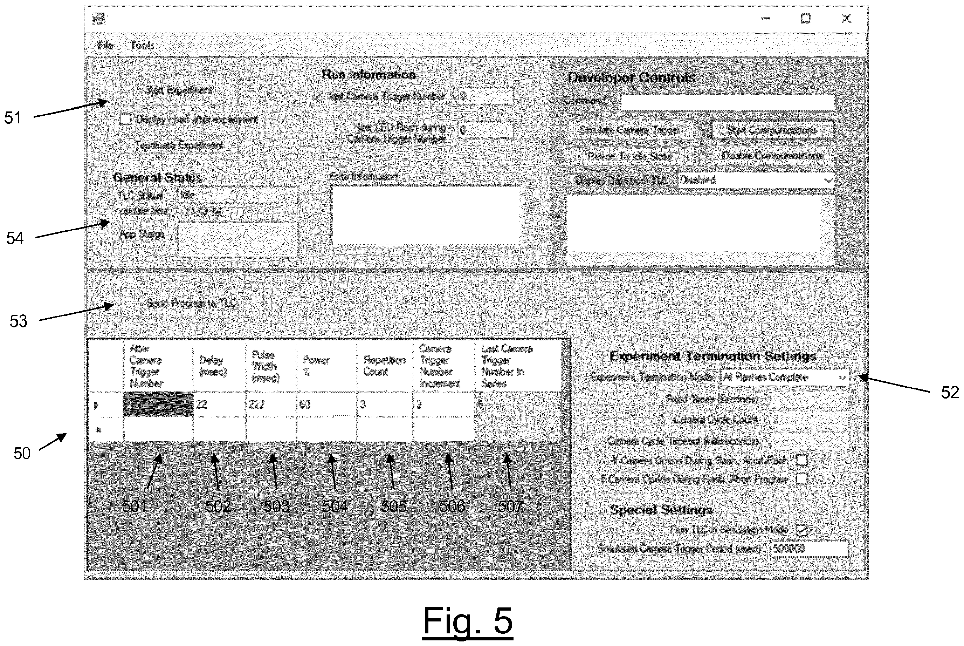

An exemplary window of the GUI of the apparatus control module 302 is shown in Figure 5. The window preferably comprises a portion 50 comprising a table with a number of rows, each row comprising pre-programmed information to activate the second light source 13 to perform a respective given sequence of flashes. Each row comprises a number of boxes into which the user may enter requested data to determine the information needed to pre-program the microcontroller 221 as indicated above. In particular, in the exemplary window shown in Figure 5, seven boxes are comprised in a row: a first box 501 is used to enter an integer number indicating the number of the camera pulse after which to make the second light source 13 flash for the first time within the considered sequence of flashes ("after camera trigger number", also indicated as TN); a second box 502 is used to enter the delay, e.g. in milliseconds, from the camera pulse to the start of the light source flash ("delay", also indicated as D); a third box 503 is used to enter the width, e.g. in milliseconds, of the light source flash ("pulse width", also indicated as W); a fourth box 504 is used to enter the intensity of the light source flash, which may be indicated e.g. as a percentage number ("intensity", also indicated as I), where 100% indicates the output intensity when the second light source 13 is provided with the maximum power available from the driver modules; a fifth box 505 is used to enter a number indicating the count of the light source flashes of the considered sequence ("repetition count", also indicated as RC); a sixth box 506 is used to enter a count of the number of camera pulses between two consecutive light source flashes of the considered sequence ("camera trigger number increment", also indicated as dTN); a seventh box 507 is providing an integer number indicating the number of the camera pulse after which to make the second light source 13 flash for the last time within the considered sequence ("last camera trigger number in series").

The data in the rows of the table may represent a so-called "flash program" used to program the microcontroller 221, the flash program comprising a number of lines corresponding to the rows of table 50, each line specifying a given group of light pulses having unique values for the information in boxes 501 to 507. In particular, each row specifies a group of light pulses, all having the same delay, width and intensity, and which can be repeated an arbitrary number of times. Any number of rows can be added, each row possibly specifying light pulses having different delay, width, intensity values. Upon completing the entry of the desired flash program, the user may transfer the flash program from the apparatus control module 302 to the microcontroller 221 by pressing a button 53.

The meaning of the data in the boxes described herein above will be clearer from the following description.

At the end of the configuration step, the experiment may be started. Start of the experiment, indicated as step 402 in Figure 4, may be activated by the user through the GUI of the apparatus control module 302. Considering the exemplary GUI window of Figure 5, a button 51 may be provided in the GUI to start the experiment run. It is to be noticed that the specific operation of the screening instrument 10 during the experiment will not be described in the following lines as it is not relevant to the present invention.

Preferably, at the start of the experiment, a counter of the camera pulses is initialized to a starting value. The counter is preferably an integer number and the starting value may be set to 0. In the flowchart of Figure 4, the counter is indicated with symbol "i" (step 403).

After start of the experiment run, the microcontroller 221 preferably reads the variables TN, D, W, I, RC, and dTN from the first flash program line (step 404). Moreover, at the start of execution of each flash program line, a counter of the flashes is initialized to a starting value. The counter is preferably an integer number and the starting value may be set to 0. In the flowchart of Figure 4, the counter is indicated with symbol "j" (step 405).

In the meanwhile, the microcontroller 221 starts monitoring the camera trigger signal that is carried along the line connecting the camera 11 and the control unit 14 of the screening instrument 10 (step 406). Monitoring the camera trigger signal is preferably performed through the camera trigger line 16 that taps the line connecting the camera 11 and the control unit 14, as schematically shown in Figure 2. During the experiment run, the microcontroller 221 preferably continuously monitors the camera trigger signal and counts the camera pulses. Each camera pulse is hence associated with a respective integer number, referred to as the camera pulse number, which indicates the current value of the counter i. It is assumed that each time a camera pulse occurs, the counter i is incremented by 1 (step 407), so that the first camera pulse in the monitored camera trigger signal is associated with a camera pulse number equal to 1, the second camera pulse in the monitored camera trigger signal is associated with a camera pulse number equal to 2, and so on.

During the experiment, the microcontroller 221 preferably checks the camera pulse number (step 408). When the camera pulse number equals the pre-programmed after camera trigger number TN, the microcontroller 221 preferably waits for the pre-programmed delay D (step 409) and then initiates the flash of the second light source 13 at the pre-programmed intensity I and width W (step 410). Then, the flash counter j is incremented (step 411), and a check is made to determine if the flash counter has reached the pre-programmed repetition count RC (step 412). In case the flash counter has not reached the pre-programmed repetition count RC, steps 407 through 412 are preferably repeated after occurrence of the next camera pulse (step 406): each time the current camera pulse number i equals the number TN+j*dTN, the microcontroller 221 preferably waits for the pre-programmed delay D and then initiates the flash of the second light source 13 at the pre-programmed intensity I and width W. In other words, a pre-programmed sequence of flashes of the light source is performed, each flash following a respective camera pulse with a delay equal to the pre-programmed delay D, wherein between two consecutive flashes a number dTN of camera pulses occur. According to an embodiment of the present invention, steps 406 through 412 are preferably repeated until the number of flashes reach the pre-programmed repetition count RC or, in other words, the camera pulse number equals the last camera trigger number in series, i.e. TN+(RC-1)*dTN.

Upon completion of the required count of flash repetitions of the first flash program line, the microcontroller 221 determines if another flash program line exists (step 413). If so, it reads the information from the next flash program line (step 404) and continues the experiment execution as described above (steps 405 to 413). According to this embodiment, the experiment run terminates when all the flashes of the pre-programmed groups of flashes have been performed.

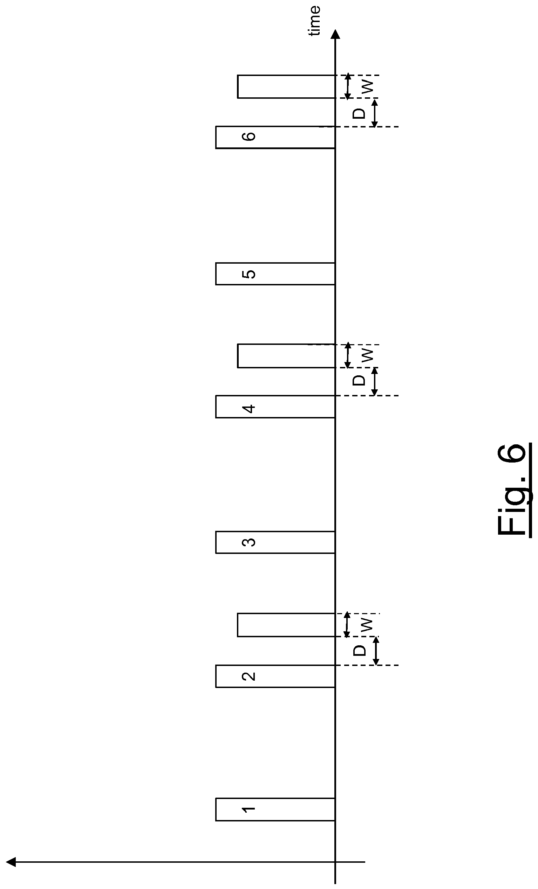

Figure 6 is a diagram schematically illustrating a single exemplary sequence of three flashes by the second light source 13 (grey boxes), each flash having a pre-programmed width W and being delayed by the pre-programmed delay D from a respective camera pulse (white boxes). Six camera pulses are schematically represented in Figure 6 as white boxes, each identified by the respective camera pulse number. According to this example, the after camera trigger number TN is equal to 2, the repetition count RC is equal to 3 and the camera trigger number increment dTN is equal to 2.

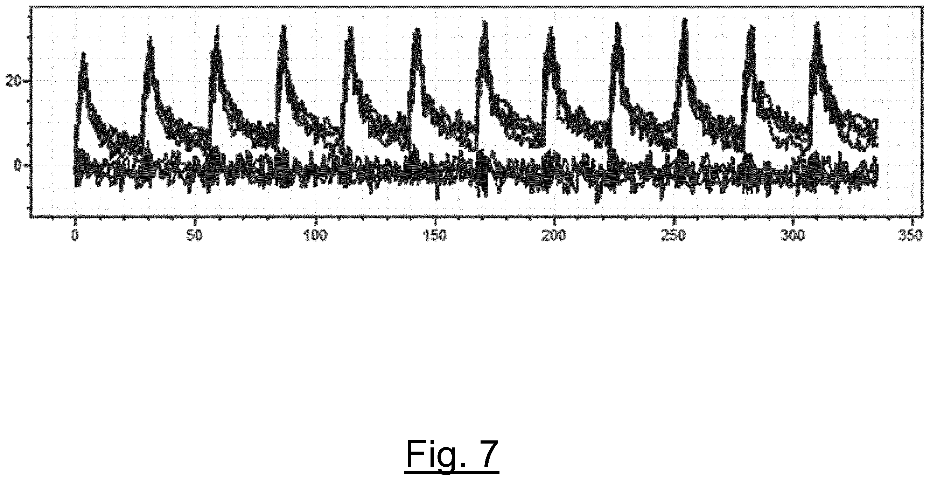

For sake of example, Figure 7 shows the results of an experiment run on mammalian cells expressing a light activated cation channel and treated with a small molecule voltage sensitive fluorescent indicator. In the experiment, the repetitive light stimulation elicits a cation influx and a cell membrane voltage increase in cells expressing the light activated channel (upper traces), and not in control cells (lower traces), which are monitored simultaneously in multiple wells of a 384-well plate. In Figure 7 the horizontal axis represents time (in seconds) while the vertical axis represents the percentage fluorescence change of the voltage sensitive indicator in a well.

During the experiment run, fifty light pulses of 15 ms width were delivered for twelve consecutive times, interleaved by 25 seconds by the light control apparatus. The fifty light pulses are spaced 71 ms apart from each other. Both the upper traces and the lower traces in Figure 7 are the overlay of four curves, each indicating the percentage fluorescence change of the voltage sensitive indicator of a respective well. The screening instrument is sampling the response at a sampling interval of about 71 msec for acquiring the first 50 samples of each group of fifty light pulses, which sampling interval increases to about 1 sec for acquiring the next 25 samples. This sampling scheme is repeated twelve times to record the entire response.

According to alternative embodiments of the present invention, the experiment run may be terminated by any one of the following conditions:
- a pre-programmed total run time has been elapsed since the first camera pulse after start of the experiment run;
- a pre-programmed total number of camera pulses (after the first camera pulse) have been detected in the monitored camera trigger signal;
- a pre-programmed timeout period (i.e. a period during which no camera pulses are detected in the monitored camera trigger signal) elapsed since the last camera pulse.
Selection of the experiment termination condition may be performed by the user through the GUI of the apparatus control module 302. Considering the exemplary GUI window of Figure 5, a drop-down menu 52 may be provided in the GUI to select the experiment termination condition in an area of the exemplary GUI window named "Experiment Termination Settings". Once the termination condition is selected, the user may specify other parameters as shown in Figure 5 below the drop-down menu 52, which are not relevant to the present description.

Preferably, during the experiment run, the microcontroller 221 records the voltage output of the photodiode 24. Recording is preferably performed by sampling the voltage output of the photodiode 24 with a given period, for example 40 milliseconds. Moreover, preferably, during each flash of the second light source 13, the microcontroller 221 acquires samples of the voltage output of the photodiode 24 at a higher frequency, for example with a period of 150 microseconds, in particular in correspondence of the beginning and the end of the light pulse. This advantageously allows to monitor the flashes of the second light source 13 while providing an improved resolution of the rise time and the fall time of the light pulse, to more accurately record the shape of the optical light pulse.

Furthermore, preferably, during the experiment run, the microcontroller 221 sends feedback information to the apparatus control module 302. The feedback information preferably includes indication of the current camera pulse number, the current flash count number, the start and end time of a flash, and readings from the photodiode. Each data item includes a timestamp (measured in microseconds from the time the microcontroller 221 was powered on) which functions as a relative time marker. The frequency of feedback information being sent to the apparatus control module 302 may vary depending on the state of the program. When there is no flash being performed and some feedback information is waiting to be reported, the information feedback may occur at a rate of approximately one data item every 2.5 milliseconds. However, while a flash is being performed, information feedback is temporarily suspended, and all relevant feedback information is held in the microcontroller memory until the end of the flash period. This temporary suspension of information feedback allows to obtain the most accurate flash timing possible; this is due to the fact that information feedback requires a significant amount of time and would otherwise negatively impact the accuracy of the flash timing. The apparatus control module 302 preferably stores the feedback information in memory, and preferably saves them in a local database.

Through the GUI of the apparatus control module 302, the user may also save to the local database the data that she/he has entered for performing given sequences of flashes. In this way, the same data may be used for any similar experiment run, without the user having to enter the data each time the experiment is to be performed.

The GUI may also provide information about the status of the apparatus 20 and in particular of the controller unit 22. For instance, the exemplary window of Figure 5 comprises an area 54 comprising boxes providing information about the status of the apparatus 20 such as an information indicating whether the apparatus is currently idle or active (such as during an experiment run); in this area, also the most recently detected camera trigger number and the most recently executed flash number may be provided.

The exemplary GUI shown in Figure 5 also comprises an area named "Developer Controls" which comprises boxes and buttons configured to be used by the GUI developer, which are not relevant to the present description.

As it will be appreciated by the skilled person, the present invention has been described above with particular reference to an exemplary implementation according to which the apparatus of the present invention cooperates with a particular screening instrument, namely the FLIPR-Tetra® imager. Indeed, the FLIPR-Tetra® imager is equipped with multiple LED banks, one of which can be left physically in place but electrically disconnected from the control unit of the screening instrument and connected to the apparatus of the present invention. However, this is not limiting since alternative implementations can be envisaged. Indeed, advantageously, the apparatus of the present invention may cooperate with other types of instruments configured to detect changes in optical parameters comprising systems for measuring the luminescence, fluorescence, absorbance, and systems performing microscopy analysis. These instruments may be provided with light sources of different kinds, such as, e.g., LEDs, lasers, lamps (e.g. halogen lamps), flashtubes (e.g. xenon flashtubes), etc. However, as already anticipated above, the present invention may also be applied in conjunction with instruments that are not provided with any light source, provided that:
- there is enough space within the instrument in which a light source controllable by the apparatus may be inserted without inhibiting the normal functioning of the instrument; and
- a technique can be identified allowing synchronization between the normal functioning of the instrument and the flashing of the light source controlled by the apparatus of the present invention.
Advantageously, in the embodiments described herein above, the mechanism of synchronization between the screening instrument and the apparatus of the present invention can be simply and effectively implemented through an electrical connection to the line that controls the camera exposure (i.e. the line connecting the camera and the control unit of the instrument). As apparent, this is applicable also to other instruments comprising a camera for monitoring changes in optical parameters. However, the mechanism of synchronization provided by the present invention may not be limited to using the electrical connection presented above. Indeed, one alternative is to use the output signal of a sensor configured to detect another normal operation of the instrument, which in this case can be a photodiode configured to detect the flashing of the light source which is not controlled by the apparatus of the present invention. In this case, synchronization may be achieved by counting the flashes of that light source (instead of the camera pulses as described above) and operating the controlled light source to flash at pre-programmed times based on the timing of the flashes of the uncontrolled light source.

Finally, as already anticipated above, the present invention can also be applied in conjunction with instruments using a non-optical detection, e.g. an electrical field detection. In this case, the mechanism of synchronization may use an electrical connection to the line that controls the electric field recording. Alternatively, the mechanism of synchronization may use a sensor configured to detect a normal functioning of the instrument, such as an electrode.

More in general, synchronization can be based on any event related to the normal functioning of the screening instrument and allows the controlled light source to flash at pre-programmed times and with pre-programmed duration.

## Claims

1. An apparatus (20) for controlling a light stimulation provided by a light source (13) in an instrument (10) suitable to perform *in vitro* testing and screening operations, the apparatus (20) comprising:
- a light source driver unit (21) connected to said light source (13) and configured to power said light source (13) to emit one or more flashes of pre-determined width, W, and intensity, I; and
- a controller unit (22) connected to the light source driver unit (21), the controller unit (22) being configured to:
- monitor a signal indicative of the occurrence of at least one event related to a normal functioning of said instrument (10); and
- operate said light source driver unit (21) to power said light source (13) to emit said at least one flash with a flash timing based on a timing of said at least one event.

2. The apparatus (20) according to claim 1, wherein said light source (13) comprises a plurality of LEDs (131, 132).

3. The apparatus (20) according to claim 2, wherein said light source driver unit (21) comprises a plurality of LED driver modules (211, 212) for operating said plurality of LEDs (131, 132), wherein a first voltage input signal is configured to control a first assembly of said LED driver modules (211) and a second voltage input signal is configured to control a second assembly of said LED driver modules (212), each of said first voltage input signal and said second voltage input signal being driven by said controller unit (22).

4. The apparatus (20) according to claim 2, wherein said light source driver unit (21) comprises a plurality of LED driver modules (211, 212) for controlling operations of said plurality of LEDs (131, 132), wherein a each of said LED driver modules (211, 212) is configured to be controlled by a respective voltage input signal, said respective voltage input signal being driven by said controller unit (22).

5. The apparatus (20) according to claim 3 or 4, wherein each of said voltage input signals is driven by said controller unit (22) via a respective operational amplifier configured as a non-inverting amplifier with a voltage gain, and wherein said controller unit (22) comprises a microcontroller (221) and at least one digital-to-analog converter (224, 225) configured to drive the input of said respective operational amplifier.

6. The apparatus (20) according to any of the preceding claims, wherein said signal comprises at least one signal feature in correspondence of said at least one event.

7. The apparatus (20) according to claim 5, wherein said at least one signal feature corresponds to at least one pulse configured to trigger at least one exposure of a camera (11) of said instrument (10), the camera (11) being configured to monitor a response of said instrument (10), and wherein said controller unit (22) is configured to detect said at least one pulse by tapping into a line connecting said camera to a control unit (14) of said instrument.

8. The apparatus (20) according to any of the preceding claims, further comprising a photodiode (24) configured to monitor the output of said light source (13).

9. The apparatus (20) according to any of the preceding claims, further comprising a control module (302) comprising a graphical user interface for providing commands to said controller unit (22) so as to pre-program it with said pre-determined width, W, and intensity, I, of said at least one flash and with information on said flash timing comprising a delay, D, of said at least one flash with respect to said at least one event.

10. A method for controlling a light stimulation provided by a light source (13) in an instrument (10) suitable to perform *in vitro* testing and screening operations, said method comprising, at a controller unit (22) connected to said light source (13):
a) monitoring a signal indicative of the occurrence of at least one event related to a normal functioning of said instrument (10); and
b) operating said light source (13) to emit at least one or more flashes of pre-determined width, W, and intensity, I, and with a flash timing based on a timing of said at least one event.

11. The method according to claim 10, wherein it further comprises pre-programming said controller unit (22) to operate said light source (13) to emit a given sequence of flashes, said pre-programming comprising providing said controller unit (22) with said pre-determined width, W, and intensity, I, of said at least one flash and with information on said flash timing comprising a delay, D, of said at least one flash with respect to said at least one event.

12. The method according to claim 11, wherein said signal comprises at least one signal feature in correspondence of said at least one event, said at least one signal feature corresponding to at least one camera pulse configured to trigger at least one exposure of a camera (11) of said instrument (10), and the method further comprises counting said at least one camera pulse to associate each camera pulse with a respective camera pulse number.

13. The method according to claim 12, wherein it further comprises:
- checking whether a current camera pulse number, i, equals a pre-programmed number, TN, indicating the number of the camera pulse after which to make said light source (13) flash for the first time within said given sequence of flashes; and
- in case said current camera pulse number, i, equals said number, TN, waiting for said pre-programmed delay, D, and operating said light source driver unit (21) to power said light source (13) to flash.

14. The method according to claim 13, wherein it further comprises:
- providing a counter, j, of said at least one flash;
- checking whether said counter, j, has reached a pre-programmed number, RC, indicating a total number of flashes within said given sequence of flashes;
- in case said counter, j, has not reached said pre-programmed number, RC, checking, after a subsequent camera pulse, whether the current camera pulse number, i, equals TN+j*dTN, wherein dTN indicates a pre-programmed number of camera pulses between two consecutive flashes of said given sequence of flashes; and
- in case the current camera pulse number, i, equals TN+j*dTN, waiting for said pre-programmed delay, D, and operating said light source driver unit (21) to power said light source (13) to flash.

15. Computer program product comprising computer-executable instructions for performing, when the program is run on a computer, the steps of the method according to any of claims 10 to 14.
